# EUROPEAN PATENT APPLICATION

(11) **EP 0 878 857 A1**
(43) Date of publication of application: **18.11.1998**
(21) Application number: 98108550.9
(22) Date of filing: 11.05.1998
(51) Int. Cl.: H01M 4/00, H01M 4/24, B22F 3/11

(54) **Metal for use in a negative electrode of an alkaline dry cell**

(30) Priority: 14.05.1997 JP 124546/97
(71) Applicant: KATAYAMA SPECIAL INDUSTRIES, LTD., Osaka-shi, Osaka-fu (JP)
(72) Inventor: Sugikawa, Hirofumi, Toyonaka-shi, Osaka-fu (JP)
(74) Representative: TER MEER STEINMEISTER & PARTNER GbR

(57) **Abstract**

A method of manufacturing a metal (14), for use in a negative electrode of an alkaline dry cell (100), consisting of only Zn or a material consisting of a metal and Zn contained therein as a main component and formed as a rod-shaped material or a tubular material having three-dimensional pores formed therein, comprising the steps of molding a mixture of a to-be-removed substance and Zn powder, Zn alloy powder and/or a powder mixture of the Zn powder and powder of a metal into a rod-shaped or tubular material by a molding machine; forming three-dimensional pores by burning off the to-be-removed substance; and sintering the rod-shaped or tubular material.

## Description

### Field of the Invention

The present invention relates to a metal for use in a negative electrode (hereinafter referred to as negative electrode metal) of an alkaline dry cell, a method of manufacturing the negative electrode metal, and an alkaline dry cell. More particularly, according to the present invention, replacing the conventional gelled negative electrode metal, solid negative electrode metal is used in the alkaline dry cell. Thus, when impacts are applied to a battery can from outside, the contact between the negative electrode metal and electrolytic solution as well as a collector can be stably maintained.

### Description of the Related Art

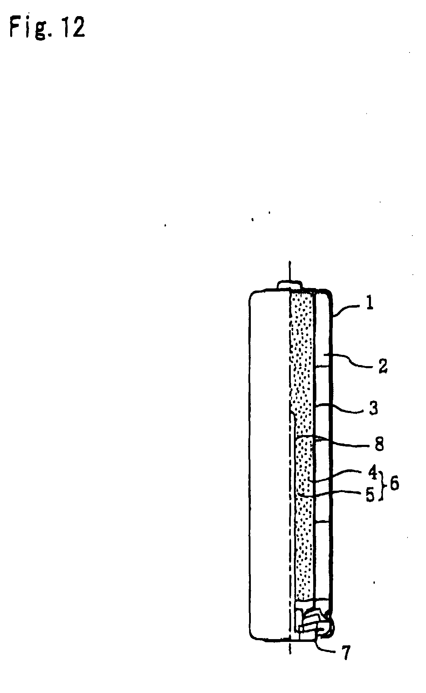

As shown in Fig. 12, the conventional alkaline dry cell comprises a positive electrode agent 2 which consists of electrolytic manganese dioxide and graphite and is positioned along the inner peripheral surface of an outer can (cathode case) 1; a gelled negative electrode 6 which is positioned inside the positive electrode agent 2 through a separator 3 and consists of electrolytic solution 4 containing gelatinizer and Zn powder 5 which serves as a negative electrode active substance and is uniformly dispersed in the electrolytic solution 4; a collector 8 positioned at the center of the gelled negative electrode 6, namely, along the axis of the battery can; and a bottom plate 7, the outer surface of which serves as the negative electrode terminal and is connected with one end of the collector 8.

Normally, the adjacent Zn powders 5 in the gelled negative electrode 6 are not agglomerated by gelatinizer, but so dispersed that they contact each other. Because the Zn powders 5 are dispersed uniformly, the Zn powders 5 and the electrolytic solution 4 contact each other in a sufficient area and thus an efficient discharge is accomplished. Electric current generated by the discharge is collected by the rod-shaped collector 8 and taken out to the outside.

However, because the gelled negative electrode 6 is flowable, the Zn powders 5 dispersed in the center of the gelled negative electrode 6 moves when a strong impact or vibration is applied to the battery can due to drop thereof or the like. As a result, the blocking between the adjacent Zn powders 5 and the blocking between the Zn powders 5 and the collector 8 are destroyed and the force of contact therebetween deteriorate. Consequently, problems occur that the discharge performance of the battery deteriorates and stable electric current cannot be taken out therefrom.

### SUMMARY OF THE INVENTION

The present invention has been made in view of the above-described problems. It is an object of the present invention to provide a metal which is used for a negative electrode of an alkaline dry cell (hereinafter referred to as negative electrode metal) and capable of stably maintaining contact between it and electrolytic solution and a connection between it and an electricity-collecting material stably even though impacts or vibrations are applied to a battery can from outside, thus allowing stable electric current to be taken out to the outside; and a method of manufacturing the negative electrode metal.

In order to solve the above-described problems, there is proposed a negative electrode metal consisting of only Zn or a metal containing Zn as a main component and formed as a rod-shaped member or a tubular member having three-dimensional pores formed therein.

When using the above-described the negative electrode metal, because the negative electrode metal is solid and tubular or rod-shaped and has three-dimensional pores formed therein, electrolytic solution contacts the entire surface of the tubular or rod-shaped negative electrode metal and the surface thereof forming the pores. Thus, the area of reaction of the negative electrode metal with the electrolytic solution can be sufficiently secured. Further, when impacts are applied to a battery can due to drop thereof or for some reason, the state of the negative electrode metal is not changed unlike the conventional gelled negative electrode because the negative electrode metal is present in a solid state in the battery can. Therefore, the contact between the negative electrode metal and the electrolytic solution can be maintained stably. Furthermore, by so positioning the tubular or rod-shaped negative electrode metal that it is in contact with the collector, the contact (connection) therebetween can be stably maintained. Thus, it is possible to obtain an alkaline dry cell superior in discharge performance and resistance to shock. Further, it is unnecessary for the electrolytic solution to contain gelatinizer for dispersing Zn powder therein unlike the conventional alkaline dry cell. Thus, using the negative electrode metal, the alkaline dry cell can be manufactured at a low cost.

The rod-shaped negative electrode metal may be circular or rectangular. Similarly, the tubular negative electrode metal may be circular or rectangular. Further, the rod-shaped negative electrode metal or the tubular negative electrode metal may be formed by rolling a sheet having three-dimensional pores formed therein. That is, the rod-shaped or tubular negative electrode metal having three-dimensional pores can be formed not only directly from only Zn or metal containing Zn as its main component, but also by rolling a sheet having three-dimensional pores formed therein. In this case, after forming a porous metal sheet consisting of only Zn or a metal containing Zn as its main component by using the method of manufacturing a porous metal sheet previously applied by the present applicant, the porous metal sheet is only rolled. Thus, it is easy to manufacture the porous metal sheet.

" A metal containing Zn as its main component " above-described means that a material consisting of Zn and a metal or metals or a semi-metal other than Zn is used as the negative electrode metal. As a preferable example of such a material, an alloy or a mixture of Zn and at least one element selected from the group of Pb, In, Bi, Y, Sn, Mg, Al, Ca, Ag, V, Co, Ni, Zr, Nb, Hf, W, and Si can be preferably used.

"A metal consisting of only Zn" above-described means that only Zn is used as raw materials for the negative electrode metal. The industrially pure Zn contains a small amount of impure elements other than Zn, and thus does not necessarily mean that the negative electrode metal is pure Zn.

When the negative electrode metal for use in a negative electrode of an alkaline dry cell consists of a metal containing Zn as its main component, it is preferable that the negative electrode metal consists of an alloy layer of Zn and any of the above-described metals (metallic elements) or semi-metals, other than the Zn, completely alloyed with the Zn. In addition, the negative electrode metal may consist of a sintered metal layer consisting of Zn powder (particle) and powder of any of the above-described metals or semi-metals, other than the Zn, partly fused and connected with the Zn powder. Further, the negative electrode metal may consist of a multi-layer coating layer, namely, it may consist of a coating layer of Zn and a coating layer of any of the above-described metals or semi-metals formed on the surface of the coating layer of Zn.

It is favorable to compose the negative electrode metal of Zn and any of the above-described metals or semi-metals other than Zn because it is possible to prevent corrosion of Zn in electrolytic solution and corrosion-caused generation of hydrogen gas. A more favorable result can be obtained by forming the negative electrode metal of an alloy or a mixture of Zn and at least one element selected from the Pb, In, Bi, and Y.

The porosity of the three-dimensional pores is preferably in the range of 25 - 95%.

When the porosity of the three-dimensional pore is set to the above range, the area of reaction of the negative electrode metal with electrolytic solution can be sufficiently increased and in addition, the negative electrode metal is not deformed easily and has a sufficient degree of strength.

The inner space of the tubular member is formed as a contact portion for inserting a rod-shaped collector thereinto so as to contact at least one portion of an inner surface of the tubular member with the rod-shaped collector; and at least one portion of one end surface of the rod- shaped material is formed as a connection portion for connecting the one portion with a plate-shaped collector.

Further, there is proposed an alkaline dry cell comprising the metal for use in an above-described negative electrode of an alkaline dry cell.

More specifically, when the negative electrode metal having three-dimensional pores is tubular, electrolytic solution is filled into the pores, a rod-shaped collector is inserted into the inner space of the tubular negative electrode metal, with one end of the rod-shaped collector connected with the bottom plate of a battery can. A rod made of brass can be used as the rod-shaped collector and is connected with bottom plate of the battery can by welding such as spot welding.

When the negative electrode metal having three-dimensional pores is rod-shaped, electrolytic solution is filled into the pores, at least one portion of one end surface of the rod-shaped negative electrode metal is connected with an electricity-collecting lead, and the electricity-collecting lead is connected with a plate-shaped collector. A nickel-plated iron plate can be used as the flat plate-shaped collector.

The battery can be easily assembled by using the negative electrode metal having such a construction. Further, in the battery, discharge reaction can be efficiently accomplished and an electricity generated by the discharge reaction can be efficiently collected by the rod-shaped collector or the flat plate-shaped collector. Thus, the battery has a high capacity and discharge performance. Furthermore, the battery is capable of maintaining contact between the negative electrode metal and electrolytic solution as well as the collector stably when impacts or vibrations are applied to a battery can from outside, thus allowing stable electric current to be taken out to the outside. That is, the battery can maintain preferable characteristics.

Further, there is proposed a method of manufacturing a metal, for use in a negative electrode of an alkaline dry cell, consisting of only Zn or a metal containing Zn as a main component and formed as a rod-shaped member or a tubular member having three-dimensional pores formed therein, comprising the steps of molding a mixture of a to-be-removed substance and Zn powder, Zn alloy Powder or/and a powder mixture of the Zn powder and powder of one or more kinds of metals other than Zn into a rod-shaped or tubular member by a molding machine;forming three-dimensional pores by burning off the to-be-removed substance; and sintering the rod-shaped or tubular member.

The powders of alloys (including semi-metal alloy) above-described can be preferably used as the Zn alloy powder. The Zn powder, the Zn alloy powder, and the powders of other metals which are mixed therewith are favorably in the range of 50 - 500 µm in their average diameters, and more favorably in the range of 100 - 300 µm in their average diameters. The configuration of the powder is not limited to a specific one, but it is preferably spherical, dice-shaped, square pillar-shaped, circular pillar-shaped, flake-shaped, flat-shaped, or scaly-shaped.

It is possible to use any substances which can be burnt off when they are heated at 200 - 400⁰C .

The following substances can be exemplified as the to-be-removed substance: powder of synthetic resins such as acrylic resin, olefin resin, styrene resin, polyamide resin, polyimide resin, polyester resin, polysulfone resin, and polyurethane resin; powder of expanded synthetic resins such as expanded polystyrene, expanded polyester, expanded polyolefin, and expanded polyurethane (polyurethane foam) ; powder of natural resins such as copal, rosin, balsam, and shellac; powder of organic substances such as cellulose, paper, and the like; powder of low-molecular organic compounds; pastes formed by dissolving or dispersing the synthetic resin, the natural resin, the organic substances, and the low-molecular organic compounds in an organic solvent; pastes formed by dissolving or dispersing water-soluble high-molecular organic substances such as starch, polyvinyl alcohol, and the like in alcohol or water; and very fine materials formed by pulverizing or cutting cloth or nonwoven cloth of synthetic fiber. The size of powder is not specified, but preferably in the range of 50 - 1000 µm.

It is favorable to use a to-be-removed substance which is powdery and superior in sublimating property in consideration of production convenience. Thus, it is preferable to use the powder of the synthetic resin, the natural resin, the organic substances, and the low-molecular organic compounds by selecting those which are superior in sublimating property. In this case, it is possible to use one or more kinds of these substances. The powder of the expanded synthetic resins such as the polyurethane foam can be exemplified as powder superior in sublimating property.

Further, in consideration of pore-forming property, substances powdery and superior in sublimating property and expandability are more favorable. Thus, it is preferable to use the powder of the synthetic resin, the natural resin, the organic substances, and the low-molecular organic compounds by selecting those which are superior in sublimating property and expandability. In this case, it is also possible to use one or more kinds of these substances. As powder superior in sublimating property and expandability, low-molecular organic compounds which are decomposed to generate gas when they are heated can be used. Azo compounds such as 2,2'-azobisisobutyronitrile; sulfonylhydrazide compounds such as benzene sulfonyl hydrazide; nitroso compounds such as N,N'-dinitroso-N,N'-dimethylterephthal amide; azido compounds such as terephthal azido are exemplified. The CELLMIKE (trade name) which is manufactured by Sankyo Kasei Co., Ltd. can be preferably used as the powder superior in sublimating property and expandability.

It is possible to use the to-be-removed substance powdery and superior in sublimating property and the to-be-removed substance powdery and superior in sublimating property and expandability by mixing them with to-be-removed substances which do not outstandingly exhibit sublimating property or expandability.

It is also possible to use the following substances as the to-be-removed substance: volatile liquids such as ethyl ether, petroleum ether, acetone, hexane, benzene; and expandable liquid substances such as expandable resins, namely, expandable phenol resin and expandable urea resin which generate gas such as carbonic acid gas, formaldehyde or water vapor when they are formed into resin. These volatile liquids or expandable liquid substances may be used instead of the above-described to-be-removed substances or by mixing the former with the latter.

When the to-be-removed substance is pasty or liquid; expandable gases such as carbonic acid gas, propane, methyl ether, methane fluoride trichloride, butane, and the like may be injected to the to-be-removed substance.

A molding machine having a screw shaft provided in a rotary cylinder and rotating in the direction opposite to that in which the rotary cylinder rotates is used to mold mixture of the Zn powder, the Zn alloy powder or/and the mixture of the Zn powder and powder of one metal other than Zn into a tubular shape. The mixture is supplied between the shaft of the screw and the inner surface of the rotary cylinder, and the rotational speed of the rotary cylinder and that of the rotation shaft of the screw are controlled. In this manner, the tubular member which has the necessary density in the consisting powder can be successively and easily manufactured.

A molding machine having the following construction is preferably used to mold the mixture into a rod-shape. The mixture is supplied into the cylinder, and a pressing rod is inserted into the cylinder to apply a predetermined pressure to the mixture. As a result, the rod-shaped member is successively pressed out from a discharge port.

According to the method, in the molded rod-shaped or tubular member, gaps (namely, pores) are formed in the space in which the to-be-removed substance has been removed. Powder of Zn powder, powder of Zn alloy or the like is sintered in this state. Thus, the rod-shaped or tubular negative electrode metal having three-dimensional pores formed therein can be manufactured easily and at a high degree of reproducibility.

If the to-be-removed substance is powdery and superior in sublimating property, the to-be-removed substance can be removed from the mixture promptly, which allows the to-be-removed substance to be removed in a short period of time and improves manufacturing efficiency.

Further, in case the to-be-removed substance is powdery and superior in sublimating property and expandability, it expands in the process of removing it from the mixture of it and the Zn powder, Zn alloy powder or the like. Consequently, large pores can be formed, which improves the porosity of a sintered material (three-dimensional porous material) obtained by sintering the Zn powder, Zn alloy powder or the like.

There is proposed a method of manufacturing a metal, for use in a negative electrode of an alkaline dry cell, consisting of only Zn or a metal containing Zn as a main component and formed on an entire peripheral surface of a brass rod as a tubular member having three-dimensional pores formed therein, comprising the steps of attaching Zn powder, Zn alloy powder or/and a powder mixture of the Zn powder and powder of one or more kinds of metals other than Zn or a mixture of a to-be-removed substance and the Zn powder, the Zn alloy powder or/and the powder mixture of the Zn powder and the powder of the metals to the entire peripheral surface of the brass rod to form thereon a coating layer having fine three-dimensional pores formed therein; and sintering the coating layer or burning off the to-be-removed substance and sintering the coating layer.

The above-described to-be-removed substances can be selectively used, provided that they can be sprayed together with the Zn powder, Zn alloy powder or the like. In this method, those powdery and superior in sublimating property can be preferably used as the to-be-removed substance, and those powdery and superior in sublimating property and expandability can be preferably in particular used as the to-be-removed substance.

According to the above-described method, the Zn powder, the Zn alloy powder, the mixture of the Zn powder and the powder of the metals other than Zn or mixture of the to-be-removed substance and any of the powder of the above metal powders is partly fused or adhesive agent is mixed therewith to allow the mixture to be viscous; the mixture is sprayed to the peripheral surface of a brass rod which is used as rod-shaped collector while brass rods are transported successively; and the mixture-sprayed brass rods are introduced into a sintering oven or a substance removing/sintering oven and taken out therefrom. As a result, the tubular metal for a negative electrode integrated with the peripheral surface of the collector can be successively manufactured. Therefore, the method eliminates the need for performing a work of contacting (connecting) the rod-shaped electricity-collecting material with the negative electrode metal, thus simplifying the process of manufacturing a battery.

Further, there is proposed a method of manufacturing a metal, for use in a negative electrode of an alkaline dry cell, consisting of only Zn or a material consisting of a metal containing Zn as a main component and formed as a tubular member or a rod-shaped member having three-dimensional pores formed therein, comprising the steps of forming a Zn coating layer, a Zn alloy coating layer or a coating layer consisting of a mixture of Zn and one or more kinds of metals other than Zn on an entire surface, including pore-forming surfaces, of a tubular member or a rod-shaped member having three-dimensional pores formed therein and made of an organic substance; burning off the organic substance; and sintering the Zn coating layer, the Zn alloy coating layer or the coating layer consisting of the mixture of Zn and the metals other than Zn to form a skeleton of the Zn coating layer, the Zn alloy coating layer or the coating layer consisting of the mixture of Zn and the metals other than Zn such that the skeleton surrounds the pores.

As the tubular member or the rod-shaped member made of an organic substance and having three-dimensional pores formed therein, a expanded synthetic resins such as expanded polyurethane, expanded polyester or expanded polyolefin; woven textile or nonwoven cloth of synthetic resinous fiber such as polyurethane fiber, polyester fiber, nylon resin and rayon or natural fiber can be used by processing them into a tubular or rod-shaped shape.

The diameter of the pore of the synthetic resinous expanded material is preferably in the range of 300 - 600 µm. The porosity thereof is preferably in the range of 70 - 95%. The diameter of the fiber of the woven textile or the nonwoven cloth made of the natural fiber is preferably in the range of 10 - 50 µm, the diameter of the pore thereof is preferably in the range of 100 - 500 µm, and the porosity thereof is preferably in the range of 70 - 95%. The metals other than Zn (semi-metal) above-described are preferably used to form the Zn alloy coating layer or the coating layer consisting of the mixture of the Zn and the metals other than Zn.

The Zn coating layer, the Zn alloy coating layer or the coating layer consisting of the mixture of Zn and the metals other than Zn can be formed by PVD (Physical Vapor Deposition) method, spraying method, atomizing method, and plating.

As the PVD (Physical Vapor Deposition) method, vacuum deposition method or sputtering method can be preferably used because these methods are capable of forming a coating layer having a high strength and a uniform composition.

The Zn coating layer, the Zn alloy coating layer or the coating layer consisting of the mixture of the Zn and the metals other than Zn can be formed by spraying a Zn powder, a Zn alloy powder or a mixture of the Zn powder and powder of the metals other than Zn to the tubular member or the rod-shaped member made of the organic substance and having three-dimensional pores formed therein, by heating them to a temperature proximate to the melting point thereof. In this case, the to-be-removed substance may be sprayed thereto, together with the any of the Zn powder, the Zn alloy powder, and the mixture of the Zn powder and the powder of the metals other than Zn. It is possible to use a spraying method which can be preferably used in the above-described manufacturing method.

According to the above-described method, the size of the three-dimensional pore of the final product, namely, the size of the pores and the porosity in the negative electrode metal can be easily controlled by adjusting the size of the pores and the porosity in the tubular member or the rod-shaped member, in forming the organic substance into the tubular member or the rod-shaped member having three-dimensional pores formed therein, and by changing the thickness of the Zn coating layer or that of the Zn alloy coating layer. Thus, negative electrode metal having a desired size and porosity can be manufactured at a high degree of reproducibility.

Further, there is proposed a method of manufacturing a metal for use in a negative electrode of an alkaline dry cell by rolling a metal fiber consisting of Zn, a Zn alloy or a mixture of Zn and one or more kainds of metals other than Zn to manufacture a tubular member or a rod-shaped member consisting of a metal fiber layer and having three-dimensional pores formed therein.

For example, a metal fiber consisting of the Zn, the Zn alloy or the mixture of the Zn and the metals other than Zn is wound around the entire peripheral surface of the brass rod or a rod made of a substance other than brass to form a metal fiber layer having three-dimensional pores formed therein. When the brass rod is used, on the peripheral surface of the brass rod, it is possible to form a tubular negative electrode metal formed of the metal fiber layer consisting of only Zn or a metal containing Zn as its main component and having three-dimensional pores formed therein.

In the case where a rod made of a material other than brass is used, after the metal fiber layer consisting of only Zn a metal containing Zn as its main component is wound around the peripheral surface of the rod, the rod is pulled out from the metal fiber layer. In this method, it is possible to obtain a tubular negative electrode metal having three-dimensional pores formed therein and having a space along the axis thereof into which an electricity-collecting rod can be inserted. The electricity-collecting rod is inserted into the space after the negative electrode metal is formed.

According to the above-described method, it is possible to control the size of the pore of the negative electrode metal consisting of the three-dimensional porous material and the porosity thereof by adjusting the diameter of the metal fiber consisting of the Zn, the Zn alloy or the mixture of the Zn and the metal other than the Zn, winding strength, and the winding density. Thus, it is possible to manufacture the negative electrode metal having a desired pore size and porosity at a high degree of reproducibility.

In the case where the metal fiber layer is formed on the peripheral surface of the brass rod, the brass rod can be utilized as the rod-shaped collector. Thus, the process of manufacturing a battery can be simplified.

There is proposed a method of manufacturing a metal for use in a negative electrode of an alkaline dry cell by rolling a three-dimensional porous metal sheet in which a coating layer consisting of Zn, a Zn alloy or a mixture of Zn and one or more kinds of metals other than Zn forms a skeleton surrounding pores to manufacture a tubular member or a rod-shaped member consisting of the three-dimensional porous metal sheet .

As the three-dimensional porous metal sheet, a three-dimensional porous metal sheet consisting of Zn or Zn alloy previously applied by the present applicant can be preferably used. To be concrete ,they are disclosed in U.S. Patent Nos. 5 300165, 5655295, 5496650 and 5531955, U.S. Patent Application Nos. 08/858922, 08/837457, 09/038130 and 09/044858, PCT International Application No. PCT/JP97/03543. It is possible to use these porous metal sheets in singleness or combination.

According to the above-described method ,the rod-shaped or tubular negative electrode metal having three-dimensional pores formed therein can be manufactured very easily by merely rolling any of these porous metal sheets. Further, by winding the porous metal sheet around the brass rod, the negative electrode metal integrated with the rod-shaped collector can be manufactured very easily.

There is proposed a method of manufacturing a metal for use in a negative electrode of an alkaline dry cell, comprising the steps of forming a rod-shaped member or a tubular member consisting of only Zn and having three-dimensional pores formed therein by using the above-described manufacturing method; and forming a coating layer consisting of a metal other than the Zn on an entire surface, including pore-forming surfaces, of the tubular material or the rod-shaped material.

PVD (Physical Vapor Deposition) method, spraying method, atomizing method, and plating can be used to form the coating layer. As the PVD method, vacuum deposition method or sputtering method can be preferably used.

The method prevents the surface of Zn from being exposed and thus Zn from contacting electrolytic solution directly, thus effectively restraining corrosion of Zn in electrolytic solution and corrosion-caused generation of hydrogen gas.

### BRIEF DESCRIPTION OF THE DRAWINGS

Fig. 1 is a sectional view showing an alkaline dry cell according to the present invention;
Fig. 2 is a partly broken-away perspective view showing a metal for the negative electrode of the alkaline dry cell shown in Fig. 1;
Fig. 3 is a schematic view showing a molding apparatus which is used in the method, according to a first embodiment of the present invention, of manufacturing a metal for the negative electrode;
Figs. 4A and 4B are views showing a process of forming powder material into rod-shaped metal for the negative electrode having three-dimensional pores;
Figs. 5A and 5B are views showing a modification of the rod-shaped negative electrode metal shown in Figs. 4A and 4B;
Fig. 6 is a schematic view showing a manufacturing apparatus which is used to manufacture a metal for use in the negative electrode of an alkaline dry cell of a second embodiment of the present invention;
Fig. 7 is partly broken-away perspective view showing the metal for use in the negative electrode of the alkaline dry cell of the second embodiment of the present invention;
Fig. 8 is a schematic sectional view showing the alkaline dry cell using the metal for use in its negative electrode of the second embodiment of the present invention;
Fig. 9 is a schematic view showing a manufacturing apparatus which is used to manufacture a metal for use in the negative electrode metal of an alkaline dry cell a fourth embodiment of the present invention;
Figs. 10A and 10B are schematic perspective views each showing a metal for use in the negative electrode metal of an alkaline dry cell of a fifth embodiment of the present invention;
Fig. 11 is a schematic perspective view showing a metal for use in the negative electrode of an alkaline dry cell of a sixth embodiment of the present invention; and
Fig. 12 is a schematic sectional view showing a metal for use in the negative electrode of a conventional alkaline dry cell.

### DESCRIPTION OF THE PREFERRED EMBODIMENTS

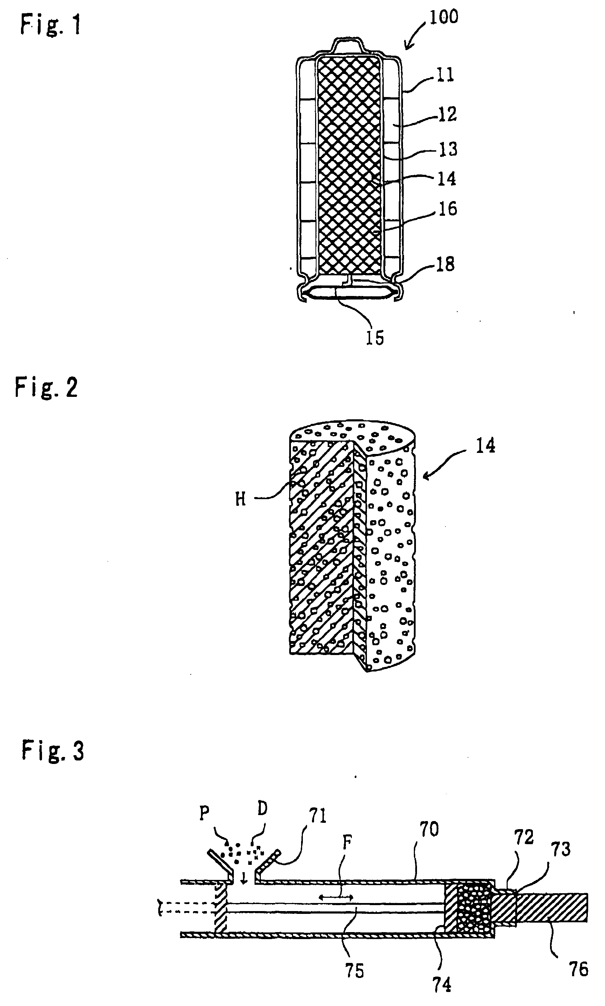

The embodiments of the present invention will be described below with reference to Figs. 1 through 11.

Fig. 1 shows an alkaline dry cell 100 using a metal for a negative electrode of the present invention. The alkaline dry cell 100 comprises a positive electrode agent 12 which consists of electrolytic manganese dioxide and graphite and is filled along the inner surface of a battery can (positive electrode casing) 11; and a rod-shaped metal 14 for a negative electrode (hereinafter referred to as negative electrode metal) of the present invention which is accommodated in the inner side of the positive electrode agent 12 through a separator 13. The lower surface of the negative electrode metal 14 and a disk-shaped collector 15 consisting of nickel-plated iron are connected with each other through a lead 18 by welding both ends of the lead 18. An electrolytic solution 16 consisting of a composition of KOH-ZnO-H₂O is filled in the portion, for accommodating the negative electrode metal 14, surrounded with the separator 13.

As shown in Fig. 2, the rod-shaped negative electrode metal 14 consists of a porous metal material consisting of only Zn or a metal containing Zn as its main component and having three-dimensional pores formed thereon and therein. Because the rod-shaped negative electrode metal 14 has three-dimensional pores (H), electrolytic solution 16 is filled in the three-dimensional pores (H). More specifically, replacing the conventional gelled negative electrode consisting of an electrolytic solution containing gelatinizer and Zn powder (active substance for negative electrode) uniformly dispersed and floating therein, the circular rod-shaped negative electrode metal consisting of only Zn or the metal containing Zn as its main component and having three-dimensional pores is used as the negative electrode metal 14. That is, the negative electrode metal is used in a stationary state, instead of a floating state.

The negative electrode metal 14 is circular rod-shaped, but it may be tubular to insert an electricity-collecting rod consisting of brass into a hole formed along the axis thereof. The method of manufacturing the negative electrode metal 14 according to the first embodiment of the present invention through the seventh embodiment thereof will be described below.

### First Embodiment

The metal for use in a negative electrode of an alkaline dry cell (hereinafter referred to as negative electrode metal) of the first embodiment is manufactured by using an extrusion molding apparatus shown in Fig. 3. The extrusion molding apparatus has a molding cylinder 70, a hopper 71 formed at the outer surface of one end of the molding cylinder 70 to introduce a powder material thereinto, a diameter-reduced portion 72 positioned at the other end of the molding cylinder 70 and having a diameter smaller than that of the molding cylinder 70. The front end of the diameter-reduced portion 72 serves as a take-out port 73 of a molded material. A pressing plate 74 is slidably fitted in the molding cylinder 70. The rear surface of the pressing plate 74 is connected with a driving device (not shown in Fig. 3) through a pressing rod 75. The driving device moves the pressing plate 74 along the axis of the molding cylinder 70. When the pressing plate 74 is moved forward toward the take-out port 73, the pressing plate 74 compresses the powder introduced into the molding cylinder 70 from the hopper 71, thus producing a rod-shaped negative electrode metal consisting of the powder and having a required density.

More specifically, a metal powder (P) for a negative electrode (hereinafter referred to as negative electrode metal powder (P)) (Zn powder, Zn alloy powder or/and powder mixture of Zn powder and powder of metal other than Zn) and a to-be-removed substance (D) mixed at a predetermined weight ratio is introduced into the hopper 71. In introducing the mixture into the hopper 71, the pressing plate 74 is positioned rearward from the hopper 71, and the opening of the molding cylinder 70 positioned at the rear end thereof is closed.

After a required amount of the mixture is introduced into the molding cylinder 70, the pressing plate 74 is moved forward toward the take-out port 73 by the driving device through the diameter-reduced portion 72 while it is compressing the mixture. The mixture passes through the diameter-reduced portion 72 and is then taken out from the take-out port 73 as a circular rod-shaped moldings 76 having an outer diameter corresponding to the inner diameter of the take-out port 73.

The negative electrode metal power (P) having a diameter in the range of 50 - 500 µm is preferably used. The diameter of the to-be-removed substance (D) is not limited to a specific range, provided that it can be burnt off in the range of 200 - 400 °C. It is preferable that the to-be-removed substance (D) is powdery and has a diameter in the range of 50 - 1000 µm.

The to-be-removed substance (D) powdery and superior in sublimating property is favorable. The to-be-removed substance (D) powdery, superior in sublimating property, and expandability is more favorable. Although the weight ratio between the negative electrode metal power (P) and the to-be-removed substance (D) is different according to substances which are used, it is preferable to set the weight ratio therebetween to 20:80-5:95 (negative electrode metal power (P): to-be-removed substance (D))

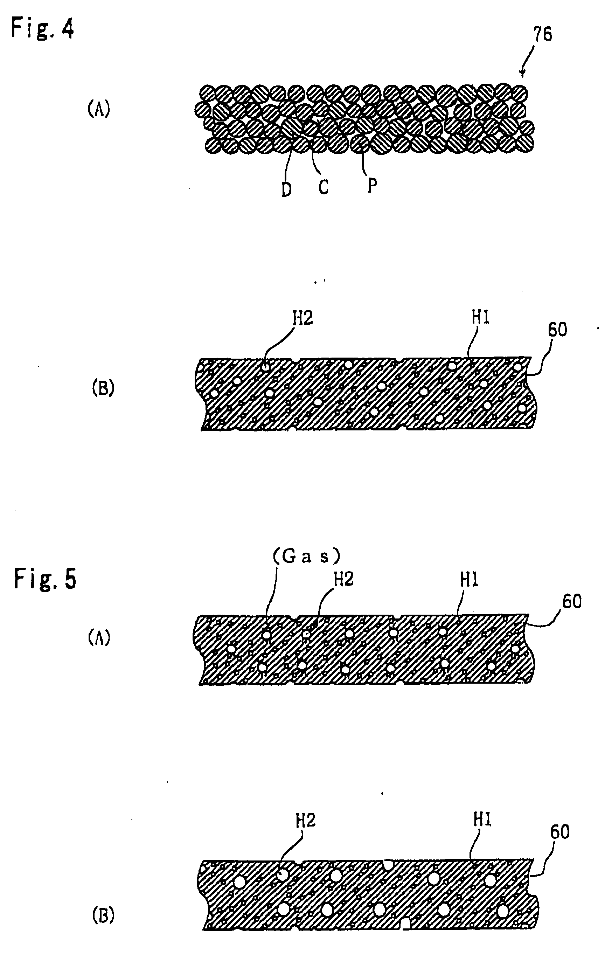

The state of the circular rod-shaped moldings 76 prepared by compressing the mixture by the extrusion molding apparatus is as shown in Fig. 4A. As shown in Fig. 4A, the negative electrode metal power (P) and the powdery to-be-removed substance (D) are connected with each other by means of point contacts or line contacts, and compressed to such an extent that there are gaps (C) among powders.

The circular rod-shaped moldings 76 is heated at 200 - 400 °C in a substance-removing oven (not shown) having a non-oxidizing atmosphere to burn off the to-be-removed substance (D). Thereafter, the negative electrode metal power (P) is heated at 350 - 400 °C in a sintering oven (not shown) having a reducing atmosphere to sinter it. As a result, a circular rod-shaped negative electrode metal 60 is obtained. As shown in Fig. 4B, the circular rod-shaped negative electrode metal 60 has pores H1 of comparative small diameters formed three-dimensionally therein in correspondence with the gaps (C) and pores H2 of comparative large diameters formed therein three-dimensionally in the positions in which the to-be-removed substance (D) has been burnt off.

If the to-be-removed substance (D) is expandable, gas is generated therefrom as shown in Fig. 5A. Consequently, as shown in Fig. 5B, the diameter of the pore H2 becomes larger.

### Experiment 1

60 parts by weight of Zn powder (average particle diameter: 200 µm) and 20 parts by weight of sublimating agent (particle diameter: 300 - 500 µm) which was powdery to-be-removed substance were mixed with each other. The mixture was introduced into the extrusion molding apparatus shown in Fig. 3 to extrude it as a circular rod-shaped moldings having a dimension of 8mm (⌀) x 50mm (L). Then, the circular rod-shaped moldings was heated at 300 °C in a substance-removing oven having a non-oxidizing atmosphere to burn off the to-be-removed substance. Thereafter, the circular rod-shaped moldings was heated at 380 °C in a sintering oven for 30 minutes in a reducing atmosphere to sinter the Zn powder. A resulting circular rod-shaped molded member was cut to obtain the negative electrode metal 14 having a length of 41mm.

As shown in Fig. 2, the circular rod-shaped negative electrode metal 14 has pores having diameters in the range of 200 - 500 µm and formed three-dimensionally on the surface and the inside thereof. The porosity of the negative electrode metal 14 was 66.5%.

After the positive electrode agent 12 consisting of electrolytic manganese dioxide and graphite was filled along the inner surface of the battery can (cathode case) 11 shown in Fig. 1, the separator 13 was provided at the inner side of the positive electrode agent 12. Thereafter, the manufactured circular rod-shaped negative electrode metal 14 was inserted into the space which was positioned at the inner side of the separator 13 and was to be formed as the negative electrode.

Then, the lower surface of the negative electrode metal 14 and the disk-shaped collector 15 consisting of nickel-plated iron were connected with each other through a lead 18 by spot-welding both ends of the lead 18. Thereafter, the electrolytic solution 16 consisting of the composition of KOH-ZnO-H₂O was injected into the space which was to be formed as the negative electrode. After the inside of the battery can was sealed with sealing agent (not shown), a positive electrode cap having a positive terminal formed on the outer surface thereof was placed on the battery can to prepare an alkaline dry cell 100 of size LR-6 (AA).

A comparison test was conducted to compare the discharge performance of the alkaline dry cell of size LR-6 (AA) thus prepared with that of a commercially available conventional alkaline dry cell of size LR-6 (AA) described previously. The alkaline dry cell of size LR-6 (AA) comprised a gelled negative electrode which consists of gelled electrolytic solution having the composition of KOH-ZnO-H₂O and containing gelatinizer consisting of sodium polyacrylate and Zn powder dispersed therein. A collector consisting of brass rod was inserted into the center of the gelled negative electrode.

It was confirmed in the test that the discharge performance of the battery of the present invention (prepared in experiment 1) was superior to that of the conventional battery by about 10%.

In the comparison test, to compare the performance of the former and the latter with each other, both batteries were dropped to the ground several times to apply a shock thereto. The result was that in the former, the performance before the shock was applied thereto was the same as that after the shock was applied thereto and that electrolytic solution did not leak therefrom, whereas in the latter, the performance after the shock was applied thereto was much lower than that before the shock was applied thereto.

### Second Embodiment

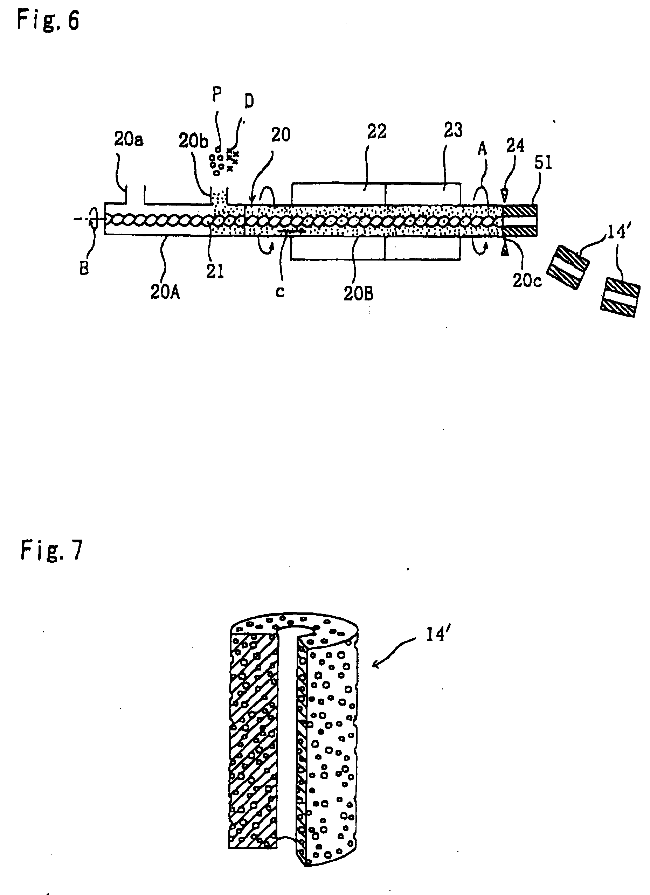

Fig. 6 shows an apparatus which is used to manufacture the negative electrode of an alkaline dry cell metal according to the second embodiment of the present invention. A circular tubular molding cylinder 20 comprises a fixed cylinder 20A positioned in the rear part thereof and a rotary cylinder 20B positioned in the front part thereof. The fixed cylinder 20A and the rotary cylinder 20B are so connected with each other that the sealing property of the molding cylinder 20 is held. A gas-introducing port 20a and a hopper 20b into which metal powder for a negative electrode (hereinafter referred to as negative electrode metal powder) is introduced are formed on the upper surface of the fixed cylinder 20A. The rotary cylinder 20B is rotated in a direction shown by an arrow (A) and inserted through a substance-removing/sintering oven 22 and a cooling oven 23. A screw 21 rotating in a direction (shown by an arrow (B)) opposite to the rotation direction of the rotary cylinder 20B is provided inside the molding cylinder 20 comprising the fixed cylinder 20A and the rotary cylinder 20B such that the screw 21 extends axially throughout the molding cylinder 20.

A reducing atmosphere is generated inside the molding cylinder 20 by introducing hydrogen gas or argon gas thereinto from the gas-introducing port 20a. In this state, a mixture of the negative electrode metal power (P) (Zn powder, Zn alloy powder or/and powder mixture of Zn powder and powder of metal other than Zn) and the to-be-removed substance (D) mixed therewith at a predetermined mixing ratio is introduced into the molding cylinder 20 from the hopper 20b.

The mixture of the negative electrode metal power (P) and the to-be-removed substance (D) is delivered in the direction shown by an arrow (C) inside the molding cylinder 20 by the rotation of the screw 21. At this time, a force of pulling the mixture of the negative electrode metal power (P) and the to-be-removed substance (D) in the direction opposite to the direction shown by the arrow (C) is applied thereto because the rotary cylinder 20B positioned in the front part of the molding cylinder 20 rotates in the direction opposite to the rotational direction of the screw 21. As a result, the mixture is fed in the direction shown by the arrow (C), with a predetermined compression force being applied thereto.

In feeding the mixture in the molding cylinder 20, a moldings 51 is successively taken out from a take-out port 20C of the rotary cylinder 20B by setting the number of rotations of the screw 21 to be larger than that of the rotary cylinder 20B. The number of rotations of the screw 21 and that of the rear part of the molding cylinder 20 are appropriately determined by the size of the blade of the screw 21, the pitch between the adjacent blades, the kind and form of the to-be-removed substance (D), and the introduction amount of the negative electrode metal power (P) and to-be-removed substance (D).

The mixture of the negative electrode metal power (P) and the to-be-removed substance (D) which is fed in the direction shown by the arrow (C) inside the molding cylinder 20 is heated at 200 - 400 °C by the substance-removing/sintering oven 22 to burn off the to-be-removed substance (D) and sinter the negative electrode metal power (P) at the same time. Then, the sintered negative electrode powder is cooled at 50 - 80 °C in the cooling oven 23 to form a circular tubuler sintered rod 51 having pores formed three-dimensionally thereon and therein. The circular tubuler sintered rod 51 is discharged to the outside from the take-out port 20c. The circular tubular sintered rod 51 having pores formed three-dimensionally thereon and therein is sequentially fed out from the take-out port 20C and cut to a required length to successively manufacture a circular tubular negative electrode metal 14' shown in Fig. 7.

### Experiment 2

60 parts by weight of Zn-Pb alloy powder (average particle diameter: 200 µm) and 10 parts by weight of sublimating agent which was powdery to-be-removed substance were mixed with each other. The mixture was introduced into the molding cylinder 20 from the hopper 20b of the extrusion molding apparatus shown in Fig. 6 to manufacture a negative electrode metal having an outer diameter of 8mm (⌀), an inner diameter of 1.5mm (⌀), and an entire length of 41mm. The molded material was heated at 380 °C in the substance-removing/sintering oven 22 and cooled at 50 °C in the cooling oven 23.

The circular tubular negative electrode metal 14' had three-dimensional pores formed on its surface and in its interior. The diameters of the pores were in the range of 200 - 500 µm. The porosity of the entire negative electrode metal 14' was 52%.

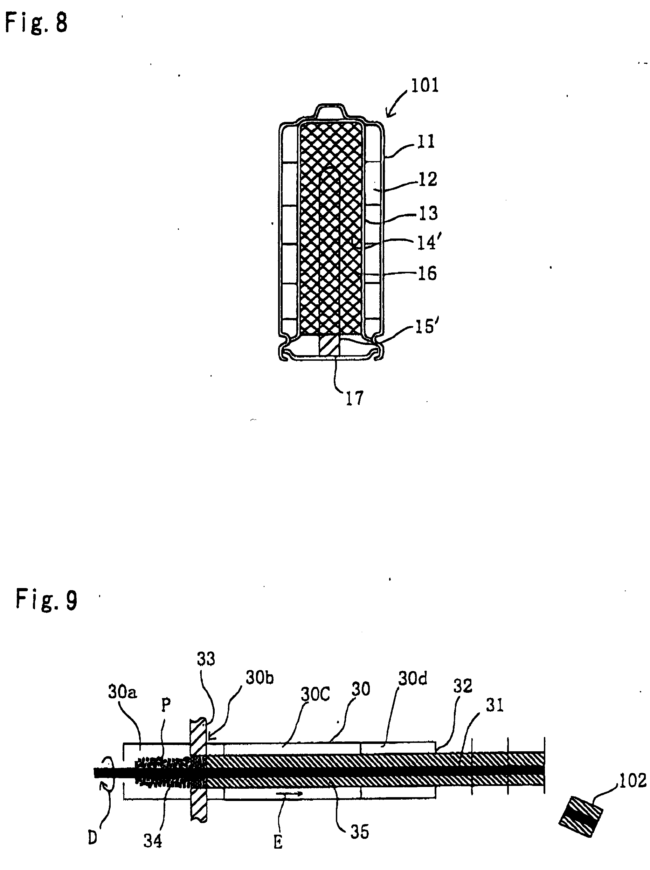

A rod-shaped collector 15' made of brass and having a diameter of 1.5mm (⌀) was inserted into the inner space of the circular tubular negative electrode metal 14' made of the Zn-Pb alloy to manufacture an alkaline dry cell 101 of size LR-6 (AA) shown in Fig. 8.

The lower end surface of the brass rod-shaped collector 15' of the alkaline dry cell 101 of size LR-6 (AA) is spot-welded with a bottom plate 17, of a battery, the outer surface of which serves as the negative electrode terminal. Excepting above-mentioned the construction of the alkaline dry cell 101, its construction was the same as that of the alkaline dry cell of size LR-6 (AA) of experiment 1.

It was confirmed in a test that the discharge performance of the alkaline dry cell 101 of size LR-6 (AA) was superior by 28% to that of the conventional battery described previously. To compare the performance of the former and the latter with each other, both batteries were dropped to the ground several times to apply a shock thereto. The result was that in the former, its performance before the shock was applied thereto was the same as that after the shock was applied thereto, and that electrolytic solution did not leak therefrom.

### Third Embodiment

In the third embodiment, using a porous base member made of foaming synthetic resin, a tubular negative electrode metal having pores formed three-dimensionally thereon and therein is manufactured.

That is, first, a foaming synthetic resin such as foaming polyurethane, foaming polyester or foaming polyolefin commercially available is processed into a tubular member having a desired size.

It is preferable to set the diameter of the pore of the foaming synthetic resin processed into the tubular shape to 300 - 600 µm and the porosity to 70 - 95%.

Then, a coating layer of Zn, a coating layer of Zn alloy or a coating layer of mixture of Zn and one or more kainds of metals other than Zn is formed on the entire surface of the tubular foaming synthetic resin, including the pore-forming surfaces thereof. The thickness of the coating layer is preferably in the range of 5 - 50 µm.

Known thin metal layer-forming methods such as PVD (Physical Vapor Deposition) method, spraying method, atomizing method, and plating can be used to form the coating layer. In addition, it is possible to use a method of spraying the negative electrode metal powder (Zn powder, Zn alloy powder or/and powder mixture of Zn powder and powder of metal other than Zn) to the foaming synthetic resin by heating it to a temperature proximate to the melting point of foaming synthetic resin in a reducing atmosphere or a method of spraying the negative electrode powder and adhesive agent to the foaming synthetic resin. In the case of the method of spraying the negative electrode powder to the foaming synthetic resin, a mixture of the negative electrode powder and a to-be-removed substance may be sprayed thereto. The to-be-removed substance consists of a substance which can be burnt off together with the foaming synthetic resin in a substance-removing process.

In spraying the negative electrode metal powder to the expanded synthetic resin, it is preferable to heat the negative electrode powder to 255 - 260 °C when the expanded synthetic resin consists of polyester, 250 - 260 °C when the expanded synthetic resin consists of nylon, 210 - 260 °C when the expanded synthetic resin consists of acrylic resin, 165 - 173 °C when the expanded synthetic resin consists of polypropylene, 125 - 230 °C when the expanded synthetic resin consists of polyethylene, and 200 - 230 °C when the expanded synthetic resin consists of polyurethane.

Then, the tubular member consisting of the expanded synthetic resin having the coating layer formed on the entire surface thereof including the pore-forming surfaces thereof is fed to a substance-removing oven in which it is heated at 200 - 400 °C to burn off the expanded synthetic resin. Then, the Zn coating layer, the Zn alloy coating layer or the coating layer of the mixture of Zn and the metal other than Zn is sintered to form a skeleton surrounding the pores. In this manner, it is possible to manufacture a tubular negative electrode metal of an alkaline dry cell having pores formed therein three-dimensionally.

A rectangular tubular negative electrode metal can be obtained by processing the expanded synthetic resin into a rectangular tubular shape, while a circular rod-shaped or rectangular rod-shaped negative electrode metal can be obtained by processing the expanded synthetic resin into a circular-rod shape or a rectangular-rod shape.

Further, instead of the tubular or rod-shaped expanded synthetic resin, it is possible to use the tubular or rod-shaped goods made of synthetic resinous fiber such as polyurethane fiber, polyester fiber , nylon resin, or natural fiber. In this case, it is preferable to use fiber having a diameter of 10 - 50 µm and 10-mesh - 120-mesh.

### Experiment 3

A expanded polyester having pores whose diameters were 300 - 600 µm and a porosity at 83% was processed into a circular tubular member having 8mm in outer diameter (⌀), 1. 5mm in inner diameter (⌀), and 41mm in entire length. A mixture of 96 parts by weight of scaly-shaped Zn powder (average diameter: 50 µm) and four parts by weight of scaly-shaped Bi powder (average diameter: 40 µm) was sprayed to the entire surface of the circular tubular member consisting of the expanded polyester and to its surface forming the pores by heating the mixture to 200 °C in a reducing atmosphere to form thereon a coating layer consisting of the Zn powder and the Bi powder and having a thickness of 30 µm on the entire surface thereof.

Then, the circular tubular member was introduced into a substance-removing oven heated to 380 °C to burn off the polyester component and then introduced into a sintering oven heated to 400 °C to sinter the Zn powder and the Bi powder to manufacture a circular tubular negative electrode metal. The circular tubular negative electrode metal had pores formed three-dimensionally on the surface thereof and the interior thereof. The diameters of the pores were 260 - 500 µm. The porosity of the negative electrode metal was 72%.

Then, using the circular tubular negative electrode metal, an alkaline dry cell of size LR-6 (AA) having the same construction as that of the alkaline dry cell of size LR-6 (AA) shown in Fig. 8 was assembled.

It was confirmed in a test that the discharge performance of the alkaline dry cell of size LR-6 (AA) was superior by 10% to that of the conventional battery described previously. To compare the performance of the former and the latter with each other, both batteries were dropped to the ground several times to apply a shock thereto. The result was that in the former, its performance before the shock was applied thereto was the same as that after the shock was applied thereto, and that electrolytic solution did not leak therefrom.

### Fourth Embodiment

Fig. 9 shows an apparatus which is used to manufacture the negative electrode metal of an alkaline dry cell according to the fourth embodiment of the present invention. A reducing atmosphere was generated inside a molding cylinder 30. A rod 31 made of brass is penetrated through the molding cylinder 30 along the axis thereof. The inside of the molding cylinder 30 is divided into a powder spraying part 30a for spraying negative electrode metal powder (Zn powder, Zn alloy powder or/and powder mixture of Zn powder and powder of metal other than Zn) (P) to the peripheral surface of the brass rod 31 by partially fusing it; a thickness adjusting part 30b having a die 33 and adjusting the thickness of a powder-attached layer 34; a sintering oven 30c; and a cooling oven 30d. These parts 30a, 30b, 30c, and 30d are positioned sequentially from the rear of the molding cylinder 30 to the front thereof at which a take-out port 32 from which a molding is taken out is positioned.

The brass rod 31 proceeds in a direction shown by an arrow (E) inside the molding cylinder 30 while it is rotating in a direction shown by an arrow (D). In the powder spraying part 30a, fused negative electrode metal power (P) is sprayed to the peripheral surface of the brass rod 31 to form the powder-attached layer 34. The thickness of the powder-attached layer 34 is adjusted to the predetermined thickness by the die 33.

With the advance of the brass rod 31 in the direction shown by the arrow (E), the powder-attached layer 34 passes through the sintering oven 30c in which the negative electrode metal powder (P) is sintered and then passes through the cooling oven 30d in which the negative electrode metal powder (P) is cooled, thus being fed out to the outside. Adjacent powders of the powder-attached layer 34 are connected with each other by point contacts or line contacts, with gaps formed among the powders. In this manner, the powder-attached layer 34 is formed as a porous metal tubular block 35 having three-dimensional pores formed therein.

The negative electrode metal power (P) having diameters in the range of 50 - 500 µm is preferably used. The thickness of the powder-attached layer 34 is adjusted to the uniform thickness by the die 33. A to-be-removed substance may be sprayed to the peripheral surface of the brass rod 31, together with the negative electrode metal powder (P). The kind of the to-be-removed substance is not specified, provided that it can be sprayed to the peripheral surface of the brass rod 31 with the negative electrode metal powder (P). But the to-be-removed substance consisting of powders having diameters in the range of 50 - 1000 µm can be preferably used. Although the weight ratio between the negative electrode metal powder (P) and the to-be-removed substance is different according to substances which are used, it is preferable to set the weight ratio therebetween to 20:80 - 5:95 (negative electrode metal powder : to-be-removed substance).

The porous metal tubular block 35 formed on the peripheral surface of the brass rod 31 is successively fed out from the take-out port 32, together with the brass rod 31 and cut to a required length sequentially, together with the brass rod 31 to form a negative electrode metal 102.

Because the brass rod 31 is used as a rod-shaped collector in the method of the fourth embodiment, it is possible to eliminate a work of contacting a rod-shaped collector with the inner peripheral surface of a tubular negative electrode metal and fixing both to each other in a battery-manufacturing process. Thus, according to the method of the fourth embodiment, the battery-manufacturing process can be simplified.

### Experiment 4

Zn powder (average diameter: 200 µm) and In powder (average diameter: 200 µm) were mixed with each other at 97 (Zn powder) : 3 (In powder) in weight ratio. The mixture of the powders was introduced into the powder spraying part 30a of the manufacturing apparatus shown in Fig. 9 and sprayed to the peripheral surface of a circular brass rod having a diameter (⌀) of 8mm. Then, a 3. 25mm-thick layer of the mixture of the Zn powder and the In powder was sintered and cooled to form, on the peripheral surface of the brass rod, a circular tubular metal member consisting of the sintered Zn and In powders and having pores formed three-dimensionally on the surface thereon and therein.

The diameters of the pores formed three-dimensionally on the surface and inside of the circular tubular metal member consisting of the sintered Zn and In powders were in the range of 20 - 150 µm. The porosity thereof was 32%.

Then, the circular tubular metal member consisting of the sintered Zn and In powders was cut together with the brass rod at 41mm length to obtain a negative electrode metal. An alkaline dry cell of size LR-6 (AA) similar to that of experiment 2 was assembled from the negative electrode metal thus obtained and the brass rod used as a collector.

It was confirmed in a test that the discharge performance of the alkaline dry cell of size LR-6 (AA) was superior by 24% to that of the conventional battery described previously. To compare the performance of the former and the latter with each other, both batteries were dropped to the ground several times to apply a shock thereto. The result was that in the former, its performance before the shock was applied thereto was the same as that after the shock was applied thereto, and that electrolytic solution did not leak therefrom.

### Fifth Embodiment

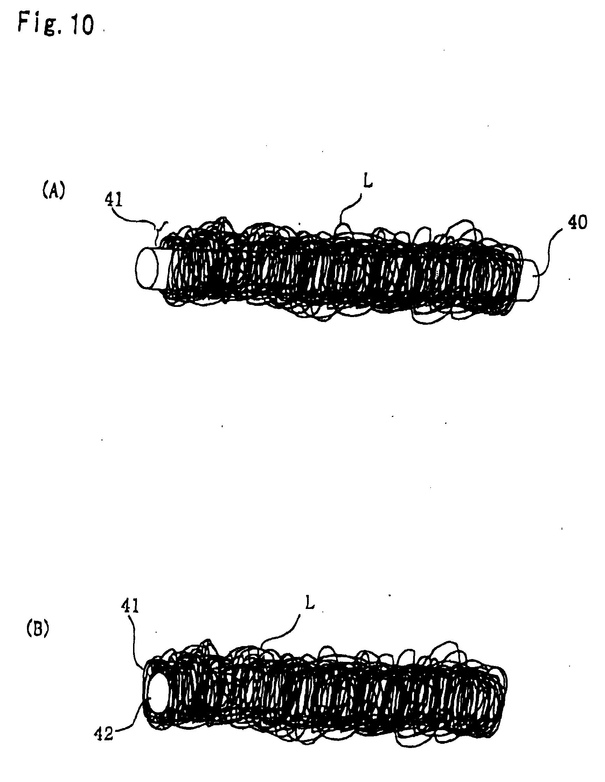

Fig. 10 shows the negative electrode metal of an alkaline dry cell of the fifth embodiment of the present invention.

As shown in Fig. 10A, one or more kinds of metal fibers (L) for a negative electrode selected from Zn fiber, Zn alloy fiber, and fiber consisting of mixture of Zn and a metal other than Zn is wound around the peripheral surface of a circular rod 40 made of brass to form a metal fiber layer 41 having pores formed three-dimensionally thereon and therein. As shown in Fig. 10B, the metal fibers (L) for a negative electrode is wound around the peripheral surface of a circular rod made of a substance other than brass to form a metal fiber layer 41 having pores formed three-dimensionally therein and thereon. Then, the circular rod made of the substance other than brass is removed from the metal fiber layer 41 to form a space 42 therein into which an electricity-collecting rod is inserted along the axis thereof. The metal fiber layers 41 shown in Fig. 10A and 10B are used as a negative electrode metal, respectively.

In the case of the negative electrode metal shown in Fig. 10A, a battery can be assembled from the negative electrode metal and the brass rod 40 serving as the collector by inserting the brass rod 40 into a region, in a battery can, which is to be formed as the negative electrode. In the case of the negative electrode metal shown in Fig. 10B, a battery is assembled by inserting the negative electrode metal into a region, in a battery can, which is to be formed as the negative electrode of a battery can after an collector consisting of a brass rod is inserted into the space 42.

The metal fibers (L) for a negative electrode is formed preferably from metal (Zn, Zn alloy or/and mixture of Zn and a metal other than Zn) by convergent drawing method, metal fiber spinning method or metal foil cutting method. In addition, a metal rod or a metal foil coil thereof is cut by chattering vibration cutting method.

The diameters of pores which are formed in the metal fiber layer 41 are preferably in the range of 100 - 300 µm. The porosity thereof is preferably in the range of 40 - 90%.

The method of winding metal fiber on a rod-shaped supporting member (including brass rod) is not limited to a specific one, but the metal fiber is wound thereon in a necessary thickness by changing winding directions. The metal fiber is wound at a winding force such that the metal fiber layer has a required pore size and porosity and is prevented from becoming loose. In order to prevent the metal fiber from becoming loose, it may be heated under pressure at a temperature lower than its melting point to fuse intersections thereof into each other. The metal fiber is heated in a non-oxidizing atmosphere.

### Experiment 5

Zn fiber having a diameter of 10 - 100 µm was wound around the peripheral surface of a circular brass rod having a diameter (⌀) of 1.5mm by changing the winding direction at random to form a metal fiber layer having a thickness of 3.25mm. The Zn fiber was wound around the peripheral surface of the circular brass rod at 2.85g/cm³. Pores having diameters in the range of 100 - 300 µm were three-dimensionally formed in the metal fiber layer. The porosity of the entire metal fiber layer was 60%.

The metal layer consisting of the Zn fiber and having the three-dimensional pores was cut together with the brass rod at 41mm length to obtain a negative electrode metal consisting of the Zn fiber. An alkaline dry cell of size LR-6 (AA) similar to that of experiment 2 was assembled from the negative electrode metal thus obtained and the brass rod used as an collector.

It was confirmed in a test that the discharge performance of the alkaline dry cell of size LR-6 (AA) was superior by about 10% to that of the conventional battery described previously. To compare the performance of the former and the latter with each other, both batteries were dropped to the ground several times to apply a shock thereto. The result was that in the former, its performance before the shock was applied thereto was the same as that after the shock was applied thereto, and that electrolytic solution did not leak therefrom.

### Sixth Embodiment

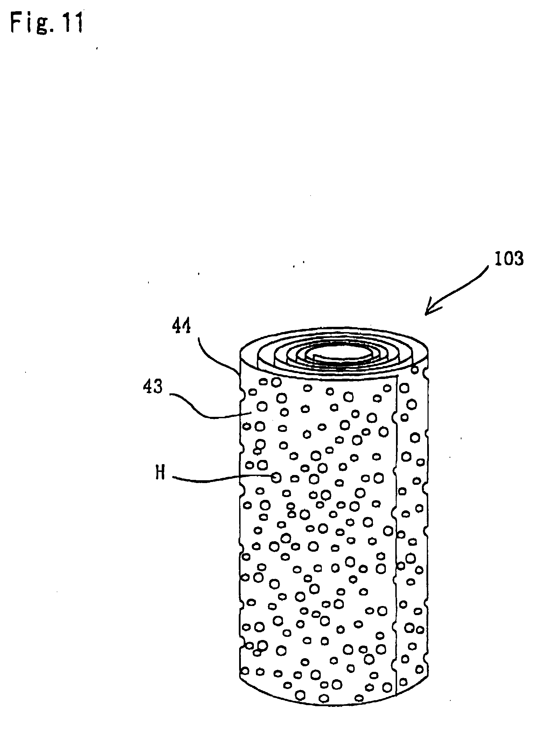

Fig. 11 shows the negative electrode metal of an alkaline dry cell of the sixth embodiment of the present invention.

A porous metal sheet 44 consisting of Zn, Zn alloy or mixture of Zn and a metal other than Zn and having three-dimensional pores (H) was formed. The porous metal sheet 44 is processed by winding it in a rod shape or a tubular shape to form a negative electrode metal 103 of an alkaline dry cell.

The diameter of the pore (H) is preferably in the range of 100 - 600 µm. The porosity of the negative electrode metal 103 is preferably in the range of 25 - 95%.

A brass rod can be utilized as an collector by winding the porous metal sheet 44 around it and leaving the brass rod in the porous metal sheet 44.

As the porous metal sheet 44, the following porous metal sheets proposed by the present applicant's prior application can be preferably used: a porous metal sheet formed by rolling Zn powder, Zn alloy powder or/and a mixture of Zn powder and powder of a metal other than Zn by a pattern roller as disclosed in U.S. Patent Application No. 08/837457; and a porous metal sheet formed by sintering metal powders without compressing them to form gaps among them, as disclosed in U.S. Patent Application No. 09/038130. In addition, porous metal sheets formed in the following, method can be preferably used: a Zn coating layer or Zn alloy coating layer is formed on a sheet consisting of a synthetic resinous expanded material, a porous base sheet consisting of an organic substance such as woven cloth or nonwoven cloth made of synthetic fiber and/or natural fiber by PVD (Physical Vapor Deposition) method, spraying method, atomizing method, and plating; the synthetic resinous expanded material or the like are removed; and then, the Zn coating layer or the Zn alloy coating layer is sintered.

### Experiment 6

A mixture of 96 parts by weight of Zn powder (average particle diameter: 200 µm) and four parts by weight of Pb powder (average particle diameter: 200 µm) was spread in a quantity of 2400g/m² on a flexible transport belt made of SUS. Then, the transport belt was heated to 400 °C and introduced into a sintering oven having a non-oxidizing atmosphere to sinter for 20 - 60 minutes the mixture of the Zn powder and the Pb powder without compressing them so that they contact partially, with spaces left among the adjacent powders. After the sintered mixture of the Zn and Pb powders was cooled at 50 °C in a cooling oven, a formed porous metal sheet consisting of the mixture of the Zn and Pb powders integrated with each other by means of the sintering was removed from the transport belt. The porous metal sheet thus formed was 0.5mm in its thickness, 20 - 150 µm in the average diameter of pores formed therein, and 25% in its porosity.

The porous metal sheet thus formed was wound in a thickness of 3.25mm around a circular rod-shaped brass rod having a diameter (⌀) of 8mm and a length of 41mm.

Then, an alkaline dry cell of size LR-6 (AA) similar to that of experiment 2 was assembled by installing the circular rod-shaped brass rod into the battery can, with the porous metal sheet wound on the peripheral surface of the circular rod-shaped brass rod.

It was confirmed in a test that the discharge performance of the alkaline dry cell of size LR-6 (AA) was superior by about 8% to that of the conventional battery described previously. To compare the performance of the former and the latter with each other, both batteries were dropped to the ground several times to apply a shock thereto. The result was that in the former, its performance before the shock was applied thereto was the same as that after the shock was applied thereto, and that electrolytic solution did not leak therefrom.

As apparent from the foregoing description, the metal (negative electrode metal) for use in a negative electrode of an alkaline dry cell consists of only Zn or a material containing Zn as a main component and is formed as a rod-shaped member or a tubular member having three-dimensional pores formed therein. Therefore, the area of reaction of the negative electrode metal with the electrolytic solution can be sufficiently secured by merely inserting it into a region which is to be formed as the negative electrode in a battery can and further, an alkaline dry cell superior in discharge performance can be easily manufactured.

Further, the negative electrode metal is present in a solid state in the battery can. Thus, when impacts are applied to a battery can due to drop thereof or for some reason, the contact between the negative electrode metal and electrolytic solution can be maintained stably. Furthermore, by so positioning the negative electrode metal that it is in contact with an collector, the contact (connection) therebetween can be stably maintained. Thus, it is possible to obtain an alkaline dry cell superior in discharge performance and resistance to shock.

Moreover, it is unnecessary for the electrolytic solution to contain gelatinizer for dispersing a powdery active substance therein unlike the conventional alkaline dry cell. Thus, using the negative electrode metal, the alkaline dry cell can be manufactured at a low cost.

## Claims

1. A metal (14), for use in a negative electrode of an alkaline dry cell (100), consisting of only Zn or a metal containing Zn as a main component and formed as a rod-shaped member or a tubular member having three-dimensional pores (H) formed therein.

2. A metal according to claim 1, wherein a sheet (44) having three-dimensional pores (H) is rolled to form said rod-shaped member or said tubular member.

3. A metal according to claim 1 or 2, wherein said metal containing Zn as a main component is an alloy or a mixture of said Zn and at least one element selected from the group of Pb, In, Bi, Y, Sn, Mg, Al, Ca, Ag, V, Co, Ni, Zr, Nb, Hf, W, and Si.

4. A metal according to any one of claims 1 through 3, wherein the porosity of said three-dimensional pores is in the range of 25 - 95%.

5. A metal according to any one of claims 1 through 4, wherein an inner space (42) of said tubular member is formed as a contact portion for inserting a rod-shaped collector (15') thereinto so as to contact at least one portion of an inner surface of said tubular member with said rod-shaped collector; and at least one portion of one end surface of said rod-shaped member is formed as a connection portion for connecting said one portion with a plate shaped collector (17).

6. An alkaline dry cell comprising the metal according to any one of claims 1 through 5.

7. A me!hod of manufacturing a metal (60), for use in a negative electrode of an alkaline dry cell, consisting of only Zn or a metal containing Zn as a main component and formed as a rod-shaped member or a tubular member having three-dimensional pores formed therein, comprising the steps of;
molding a mixture of a to-be-removed substance (D) and Zn powder (P), Zn alloy powder and/or a powder mixture of said Zn powder and powder of one or more kinds of metals other than Zn into a rod-shaped or tubular member (76) by a molding machine;
forming three-dimensional pores by burning off said to-be-removed substance; and
sintering said rod-shaped or tubular member.

8. A method of manufacturing a metal (102), for use in a negative electrode of an alkaline dry cell, consisting of only Zn or a metal containing Zn as a main component and formed on an entire peripheral surface of a brass rod (31) as a tubular member having three-dimensional pores formed therein, comprising the steps of:
attaching Zn powder, Zn alloy powder and/or a powder mixture of said Zn powder and powder of one or more kinds of metals other than Zn or a mixture of a to-be-removed substance and said Zn powder, said Zn alloy powder and/or said powder mixture of said Zn powder and said powder of said metals other than Zn to said entire peripheral surface of said brass rod (31) to form thereon a coating layer (34) having fine three-dimensional pores formed therein; and
sintering said coating layer or burning off said to-be-removed substance and sintering said coating layer.

9. A method of manufacturing a metal, for use in a negative electrode of an alkaline dry cell, consisting of only Zn or a metal containing Zn as a main component and formed as a rod-shaped member or a tubular member having three-dimensional pores formed therein, comprising the steps of:
forming a Zn coating layer, a Zn alloy coating layer or a coating layer consisting of a mixture of Zn and one or more kinds of metals other than Zn on an entire surface, including pore-forming surfaces, of a tubular member or a rod-shaped member having three-dimensional pores formed therein and made of an organic substance;
burning off said organic substance; and
sintering said Zn coating layer, said Zn alloy coating layer or said coating layer consisting of a mixture of Zn and one or more kinds of metals other than Zn to form a skeleton of said Zn coating layer, said Zn alloy coating layer or said coating layer consisting of mixture of Zn and one or more kinds of metals other than Zn such that said skeleton surrounds said pores.

10. A method of manufacturing a metal for use in a negative electrode of an alkaline dry cell by rolling a metal fiber (L) consisting of Zn, a Zn alloy or a mixture of Zn and one or more kinds of metals other than Zn to manufacture a tubular member or a rod-shaped member consisting of a metal fiber layer (41) and having three-dimensional pores formed therein.

11. A method of manufacturing a metal (103) for use in a negative electrode of an alkaline dry cell by rolling a three-dimensional porous metal sheet (44) in which a coating layer consisting of Zn, a Zn alloy or a mixture of Zn and one or more kinds of metals other than Zn forms a skeleton surrounding pores to manufacture a tubular member or a rod-shaped member consisting of said three-dimensional porous metal sheet.

12. A method of manufacturing a metal for use in a negative electrode of an alkaline dry cell, comprising the steps of:
forming a rod-shaped member or a tubular member consisting of only Zn and having three-dimensional pores formed therein by using the manufacturing method according to any one of claims 7 through 11; and
forming a coating layer consisting of one or more kinds of metals other than Zn on an entire surface, including pore-forming surfaces, of said tubular member or said rod-shaped member.
